# EUROPEAN PATENT APPLICATION

(11) **EP 2 638 971 A1**
(43) Date of publication of application: **18.09.2013**
(21) Application number: 13159255.2
(22) Date of filing: 14.03.2013
(51) Int. Cl.: B05B 1/16, E03C 1/04, B05B 1/18

(54) **Hand shower head**

(30) Priority: 16.03.2012 JP 2012059844; 09.08.2012 JP 2012177272
(71) Applicant: Toto Ltd., Kitakyushu-shi, Fukuoka 802-8601 (JP)
(72) Inventor: Aihara, Yutaka, Kitakyushu-shi, Fukuoka 802-8601 (JP); Miura, Tsuyoshi, Kitakyushu-shi, Fukuoka 802-8601 (JP); Nishijima, Hiroshi, Kitakyushu-shi, Fukuoka 802-8601 (JP); Ishiyama, Sho, Kitakyushu-shi, Fukuoka 802-8601 (JP); Uemura, Yasufumi, Kitakyushu-shi, Fukuoka 802-8601 (JP); Tanabe, Masaya, Kitakyushu-shi, Fukuoka 802-8601 (JP)
(74) Representative: Takeuchi, Maya

(57) **Abstract**

Provided is a shower head that can easily switch a plurality of water spouting modes while securing a sufficient water spouting flow rate. The invention provides a hand shower head capable of switching between a plurality of water spouting modes, including: a hand shower head body; a seating portion seated on a valve seat, and a plurality of valve elements each having a seating portion support portion that extends from the seating portion and supports the seating portion such that the seating portion is movable along a movement axis; a water spouting mode switching member; and a valve element drive mechanism that causes a force to be applied on the seating portion support portion based on an operation on the water spouting mode switching member to move the seating portion, wherein the plurality of valve elements are arranged such that the movement axes of the seating portion support portions are approximately parallel to each other, and an interval between central axes of the seating portions is formed to be larger than an interval between the movement axes.

## Description

### BACKGROUND OF THE INVENTION

### (1) Field of the Invention

The present invention relates a hand shower head, and in particular to a hand shower head capable of switching between a plurality of water spouting modes by switching water passages by a plurality of lift valves.

### (2) Description of Related Art

In recent years, a hand shower head which can be used by switching a plurality of water spouting modes has been developed. In such a hand shower head, the water spouting patterns are changed by switching between internal water passages by operating valve elements housed in a shower head body.

JP 2002-165719 A describes a shower head. This shower head is equipped with a button at the leading end thereof for switching the water spouting patterns, and through the operation of this button, a valve port is opened and closed by a flow path switching mechanism housed in a water spray portion of the shower head to switch the water spouting patterns.

However, the shower head described in JP 2002-165719 A has a problem with its poor operability in that it is necessary to operate the button with the hand which is not holding the shower head in switching the water spouting patterns because the button for switching the water spouting patterns is provided at the leading end of the shower head. Specifically, if the operation portion for switching the water spouting patterns is disposed near the gripper portion of the shower head, the user can switch the water spouting patterns with his/her finger of the hand which is holding the shower head while taking a shower, so that the operability will be improved.

However, since the gripper portion of the shower head is a portion gripped by the user, the gripper portion is required to have a thickness at which the gripper portion can be easily gripped. Therefore, if the operation unit for switching the water spouting patterns is disposed in the gripper portion having the limited thickness and the water passage switching device is housed in the gripper portion, flow path sectional areas of the water passages switched by the water passage switching device are reduced, and a sufficient water spouting flow rate cannot be obtained.

It is therefore an object of the present invention to provide a shower head that can easily switch a plurality of water spouting modes while securing a sufficient water spouting flow rate.

### SUMMARY OF THE INVENTION

In order to accomplish the above object, the present invention provides a hand shower head capable of switching between a plurality of water spouting modes by switching water passages by a plurality of lift valves, including: a hand shower head body equipped with a gripper portion and a water spray portion thicker than the gripper portion, the gripper portion being gripped by a user; a seating portion seated on a valve seat of each of the lift valves, and a plurality of valve elements each having a seating portion support portion that extends from the seating portion and supports the seating portion; a water spouting mode switching member operated by the user to switch the water spouting modes; and a valve element drive mechanism that causes a force to be applied on the seating portion support portion based on an operation on the water spouting mode switching member to move the seating portion between a valve-open position and a valve-closed position, wherein the seating portion support portion is moved along a movement axis to move the seating portion between the valve-open position and the valve-closed position, the plurality of valve elements are arranged such that the movement axes of the seating portion support portions are approximately parallel to each other, and an interval between central axes of the seating portions is formed to be larger than an interval between the movement axes.

In the above hand shower head of the present invention, when the water spouting mode switching member is operated by the user, the seating portion of the valve element is moved between the valve-open position and the valve-closed position by the valve element drive mechanism. Accordingly, the water passages in the hand shower head body are switched to switch the water spouting modes. Each of the valve elements includes a seating portion seated on a valve seat of each of the lift valves and a seating portion support portion that extends from the seating portion and supports the seating portion. The seating portion support portion is moved along the movement axis to move the seating portion between the valve-open position and the valve-closed position. The movement axes of the seating portion support portions are arranged to be approximately parallel to each other, and an interval between the central axes of the seating portions is formed to be larger than the interval between the movement axes.

According to the above hand shower head of the present invention, since the water passages can be switched by the plurality of lift valves, water stopping and water spouting can be reliably performed. Further, since the interval between the seating portions is formed to be larger than the interval between the movement axes, the seating portions can be increased in size while collectively arranging the seating portion support portions for driving the valve elements, and a sufficient water spouting flow rate can be secured.

Further, the present invention provides a hand shower head capable of switching between a plurality of water spouting modes by switching water passages by a plurality of lift valves, including: a hand shower head body equipped with a gripper portion and a water spray portion thicker than the gripper portion, the gripper portion being gripped by a user; a seating portion seated on a valve seat of each of the lift valves, and a plurality of valve elements each having a seating portion support portion that extends from the seating portion and supports the seating portion; a water spouting mode switching member operated by the user to switch the water spouting modes; and a valve element drive mechanism that causes a force to be applied on the seating portion support portion based on an operation on the water spouting mode switching member to move the seating portion between a valve-open position and a valve-closed position, wherein the seating portion support portion is moved along a movement axis to move the seating portion between the valve-open position and the valve-closed position, and the plurality of valve elements are arranged such that an interval between the movement axes of the seating portion support portions is larger on a seating portion side and becomes smaller toward a side that is distant from the seating portion.

According to the above hand shower head of the present invention, since the water passages can be switched by the plurality of lift valves, water stopping and water spouting can be reliably performed. Further, since the plurality of valve elements are arranged such that the interval between the movement axes of the seating portion support portions is larger on the seating portion side and becomes smaller toward the side that is distant from the seating portion, the seating portions can be increased in size while collectively arranging the seating portion support portions for driving the valve elements, and a sufficient spouting water flow rate can be secured.

Herein, the interval between the movement axes refers to a minimum distance from a certain point on the movement axis to a movement axis adjacent thereto. In other words, "a movement axis is designed such that a minimum distance between the movement axis and a movement axis adjacent thereto decreases as the movement axis becomes distant from the seating portion".

Preferably, in the hand shower head of the present invention, the water spouting mode switching member is disposed in the gripper portion of the hand shower head body, and the seating portions are housed in the water spray portion of the hand shower head body.

According to the above hand shower head of the present invention, since the water spouting mode switching member is disposed in the gripper portion of the hand shower head body, the user can operate the water spouting mode switching member with her/his finger of the hand which is holding the hand shower head, so that the operability of water spouting mode switching can be improved. Further, since the seating portions are housed in the water spray portion thicker than the gripper portion, each of the seating portions can be increased in size, and a sufficient spouting water flow rate can be secured.

Preferably, in the hand shower head of the present invention, three valve elements are arranged in a line, and the valve elements arranged at both ends of the three valve elements are formed to be bent such that the seating portions of the valve elements come away from the valve element arranged at the center.

According to the above hand shower head of the present invention, the valve elements arranged at both ends of the three valve elements arranged in a line are formed to be bent such that the seating portions of the valve elements come away from the valve element arranged at the center, even if the seating portion support portions of the valve elements are arranged in proximity to each other, the large-size seating portions do not interfere with each other. Further, since the valve elements are bent and integrally formed, a force applied on the seating portion support portion can be transmitted to the seating portion without loss, and a required driving force of the valve element is not increased.

According to the hand shower head of the present invention, a plurality of water spouting modes can be easily switched while securing a sufficient water spouting flow rate.

### BRIEF DESCRIPTION OF THE DRAWINGS

FIG. 1 is a perspective view illustrating an appearance of a hand shower head according to a first embodiment of the present invention.
FIG. 2 is a cross-sectional view of the hand shower head according to the first embodiment of the present invention.
FIG. 3 is a cross-sectional enlarged view of a water passage switching device housed in the hand shower head.
FIG. 4 is an exploded perspective view of the water passage switching device housed in the hand shower head.
FIG. 5 is a cross-sectional view illustrating water passages switched in the hand shower head.
FIG. 6 is a perspective view of a valve element housed in the water passage switching device.
FIG. 7 is a perspective view of an annular lock member provided in the water passage switching device.
FIG. 8 is a perspective view of a cam-constructing member provided in the water passage switching device.
FIG. 9 is a perspective view of an operation portion covering member provided in the water passage switching device.
FIG. 10 is a cross-sectional perspective view of the operation portion covering member provided in the water passage switching device.
FIG. 11 is a diagram for explaining actions of the water passage switching device housed in the hand shower head.
FIG. 12 is a diagram for explaining actions of the water passage switching device housed in the hand shower head.
FIG. 13 is a cross-sectional view of the hand shower head according to modification of the present invention.

### DESCRIPTION OF EMBODIMENTS

A hand shower head according to a first embodiment of the present invention will now be described with reference to the accompanying drawings.

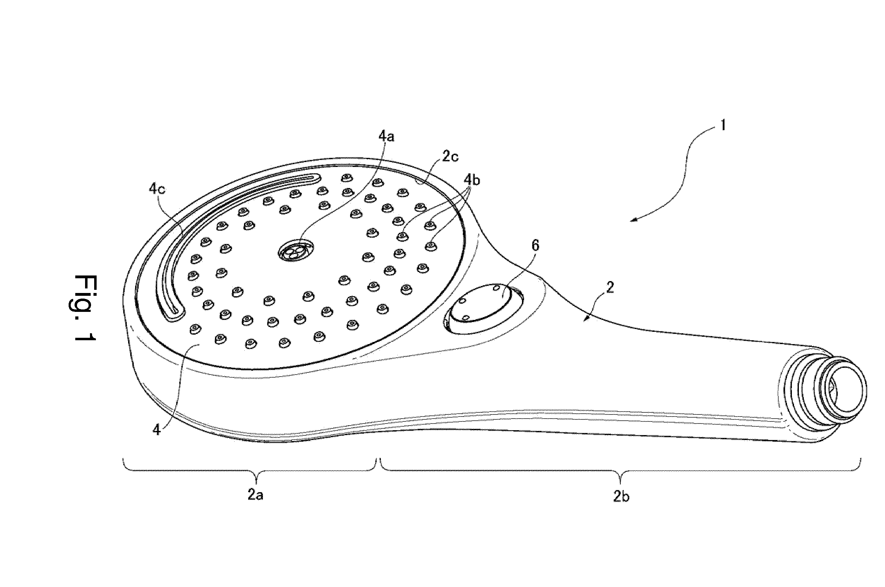

FIG. 1 is a perspective view illustrating an appearance of a hand shower head according to the first embodiment of the present invention.

As illustrated in FIG. 1, the hand shower head 1 of this embodiment comprises a shower head body 2, a water spray plate 4 attached to a distal end of this shower head body 2, and a push-button 6 for switching between water-stopping state and water-spouting state, and switching between three water spouting modes of the water-spouting state. Specifically, according to the push-button 6, it is possible to switch between water-stopping state and three water spouting modes, so that a total of four water spouting and stopping modes are switched to each other by the push-button 6. The shower head body 2 includes a gripper portion 2b for being gripped by a user, and a water spray portion 2a provided on the distal end side of and is thicker than the gripper portion 2b. The water spray portion 2a is formed with a circular opening 2c to which the water spray plate 4 is attached. Further, a shower hose (not shown) is connected to the base end side of the shower head body 2.

The water spray plate 4 is an approximately circular plate, in the center of which a water spray hole 4a for gyro-beat spouting, where spouting is performed with a water spray nozzle being rotated, is provided. A number of water spray holes 4b for spray spouting are provided around the water spray hole 4a, and an arc-shaped water spray hole 4c for waterfall-like spouting is provided on the distal end side on the shower head body 2. The push-button 6 is a disk-shaped button disposed in the gripper portion 2b of the shower head body 2 on the side closer to the opening 2c, and is directly operated by a user. By pushing this push-button 6 to tilt it to each direction, a water passage switching device housed in the shower head body 2 is actuated to switch between each water-spouting state of the gyro-beat spouting, spray spouting and waterfall-like spouting, and water-stopping state.

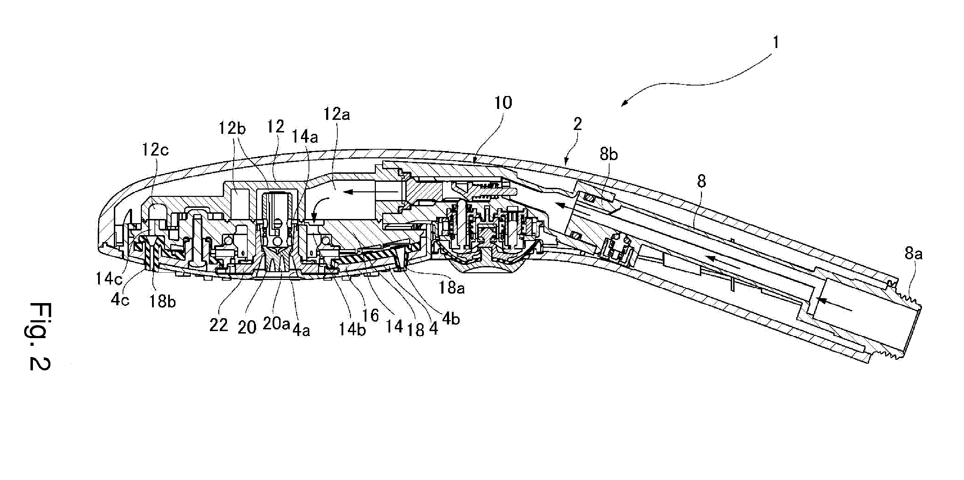

An internal structure of the hand shower head 1 according to the first embodiment of the present invention will be described below with reference to FIGS. 2 to 8.
FIG. 2 is a cross-sectional view of the hand shower head according to this embodiment. As illustrated in FIG. 2, the shower head body 2 houses a water flow passage forming member 8, a water passage switching device 10 connected to the distal end of the water flow passage forming member 8, and a first water spray chamber forming member 12 connected to the distal end of the water passage switching device 10. The shower head body 2 further houses a second water spray chamber forming member 14 attached to cover the first water spray chamber forming member 12, a third water spray chamber forming member 16 disposed on a back side of the water spray plate 4, and a water spray nozzle forming member 18 disposed on a back side of the third water spray chamber forming member 16. The shower head body 2 also houses a rotary nozzle 20 for performing a gyro-beat spouting, and a rotary nozzle supporting member 22 for supporting the rotary nozzle 20.

The water flow passage forming member 8 is an elongated tubular member, and has a base end formed as a connection end 8a which is connected to the shower hose (not shown). The water flow passage forming member 8 also has a distal end 8b to which the water passage switching device 10 is connected. An O-ring is disposed between the water flow passage forming member 8 and the water passage switching device 10 to ensure water-tightness therebetween. Details of the water passage switching device 10 will be described later.

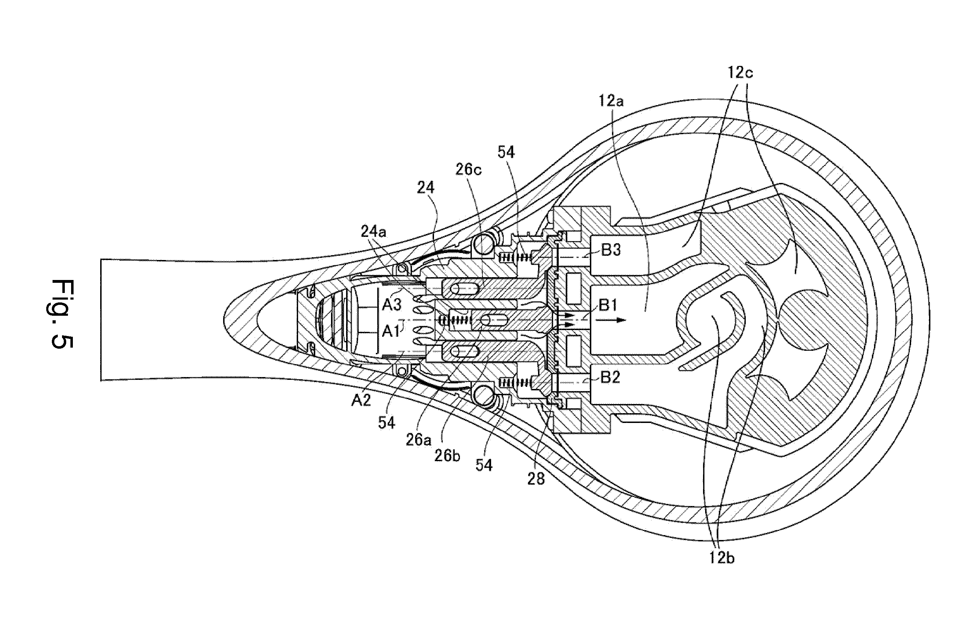

The first water spray chamber forming member 12 is a box-shaped member connected to the distal end side (downstream side) of the water passage switching device 10, and is housed in the back side of the water spray plate 4. An O-ring is disposed between the first water spray chamber forming member 12 and the water passage switching device 10 to ensure water-tightness therebetween. The first water spray chamber forming member 12 includes a first water passage 12a, a second water passage 12b and a third water passage 12c (also illustrated in FIG. 5) formed therein. Hot and cold water that has flowed out from the water passage switching device 10 passes through the first water passage 12a, the second water passage 12b and the third water passage 12c, and is guided to the water spray hole 4a for gyro-beat spouting, the water spray holes 4b for spray spouting and the water spray hole 4c for waterfall-like spouting, respectively. The side of the first water spray chamber forming member 12 which is closer to the water spray plate 4 is opened, and the second water spray chamber forming member 14 is attached to cover the opening.

The second water spray chamber forming member 14 is an approximately disk-shaped member disposed to cover the opening of the first water spray chamber forming member 12. The second water spray chamber forming member 14 is provided with a concave portion 14a in the center thereof so as to communicate with the first water passage 12a, into which the rotary nozzle 20 for gyro-beat spouting is rotatably disposed. The second water spray chamber forming member 14 is provided with a through-hole 14b so as to communicate with the second water passage 12b, and the hot and cold water that has passed the through-hole 14b is spouted from the water spray holes 4b for spray spouting. Further, the second water spray chamber forming member 14 is provided with a through-hole 14c so as to communicate with the third water passage 12c, and the hot and cold water that has passed the through-hole 14c is spouted from the water spray hole 4c for waterfall-like spouting.

The third water spray chamber forming member 16 is an approximately disk-shaped member disposed to overlap with the back side of the water spray plate 4. A space between the back side of the third water spray chamber forming member 16 and the front side of the second water spray chamber forming member 14 forms a water spray chamber for spray spouting.

The water spray nozzle forming member 18 is an approximately disk-shaped rubber member, and is disposed between the second water spray chamber forming member 14 and the third water spray chamber forming member 16. The water spray nozzle forming member 18 is provided with a number of water spray nozzles 18a for spray spouting. These water spray nozzles 18a are projected outside of the hand shower head 1 through a number of water spray holes 4b provided in the water spray plate 4 and a number of holes provided in the third water spray chamber forming member 16, each designed to align with a respective one of the water spray holes 4b. The water spray nozzle forming member 18 is also provided with a water spray nozzle 18b for waterfall-like spouting so as to be located at the distal end side of the hand shower head 1. The water spray nozzle 18b is projected outside of the hand shower head 1 through the arc-shaped water spray hole 4c provided in the water spray plate 4 and an arc-shaped hole provided in the third water spray chamber forming member 16 so as to be aligned with the water spray holes 4c. The water spray nozzle forming member 18 is made of a rubber, so that it is pressed against a fringe 14d of the second water spray chamber forming member 14, thereby to ensure water-tightness therebetween.

The rotary nozzle 20 is an approximately solid cylindrically-shaped member, and is provided with three spray nozzle holes 20a for gyro-beat spouting in an axial direction thereof. The rotary nozzle supporting member 22 is an approximately hollow cylindrically-shaped member for rotatably supporting the rotary nozzle 20. The rotary nozzle supporting member 22 rotatably receives and supports the rotary nozzle 20 therein, and is fitted into the concave portion 14a provided in the second water spray chamber forming member 14. When the hot and cold water flows into second water passage 12b of the first water spray chamber forming member 12, the flow force thereof urges the rotary nozzle 20 to make a precession (precessional movement) in the rotary nozzle supporting member 22, which causes the water spouting to be performed in a spiral manner.

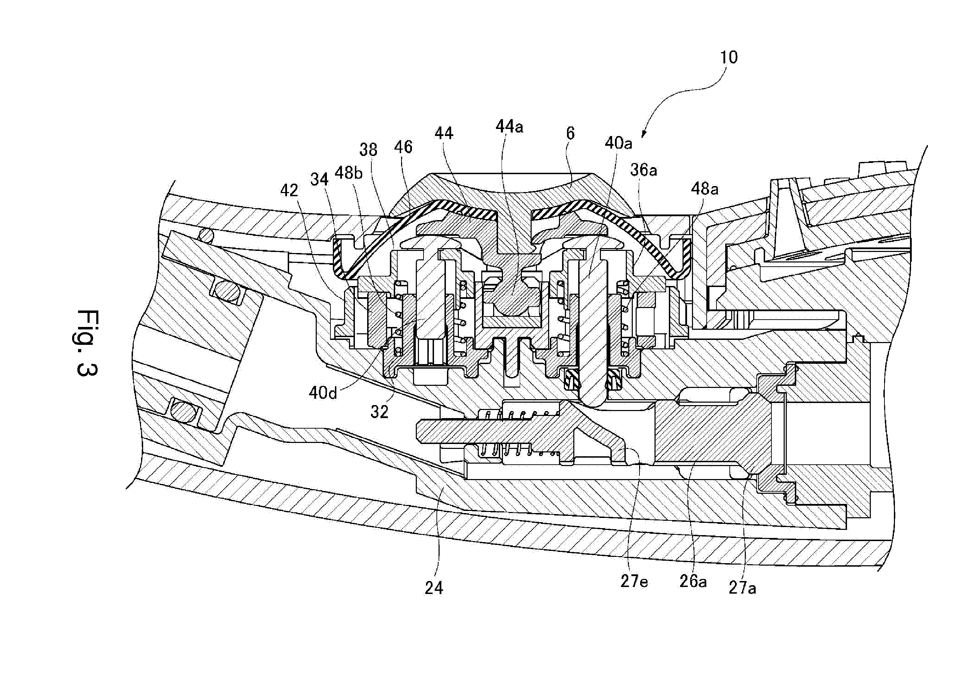

The water passage switching device 10 housed in the hand shower head 1 according to the first embodiment of the present invention will be described below with new reference to FIGS. 3 to 8.

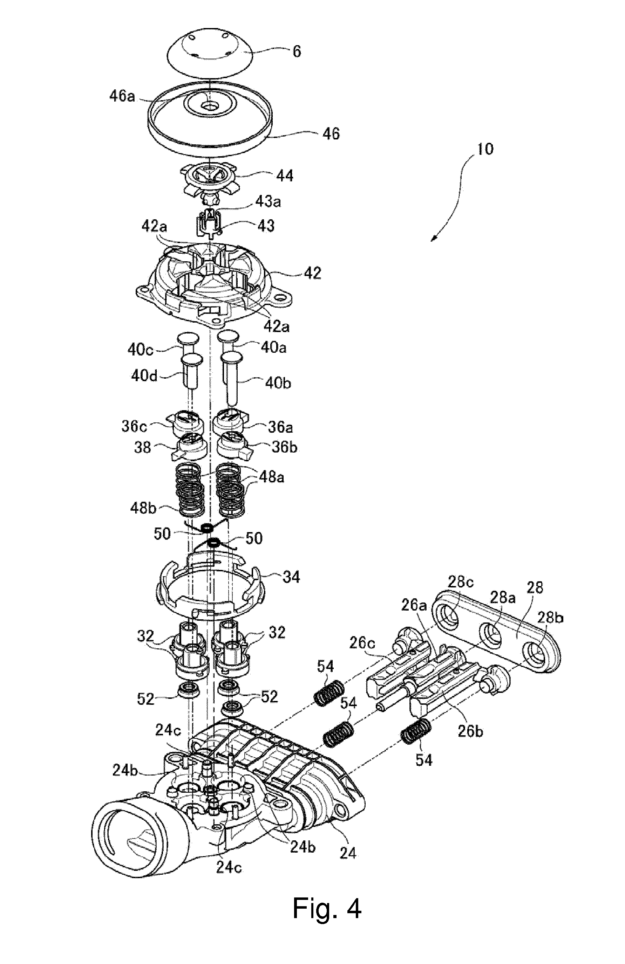

FIG. 3 is a cross-sectional enlarged view of a water passage switching device housed in the hand shower head. FIG. 4 is an exploded perspective view of the water passage switching device housed in the hand shower head.

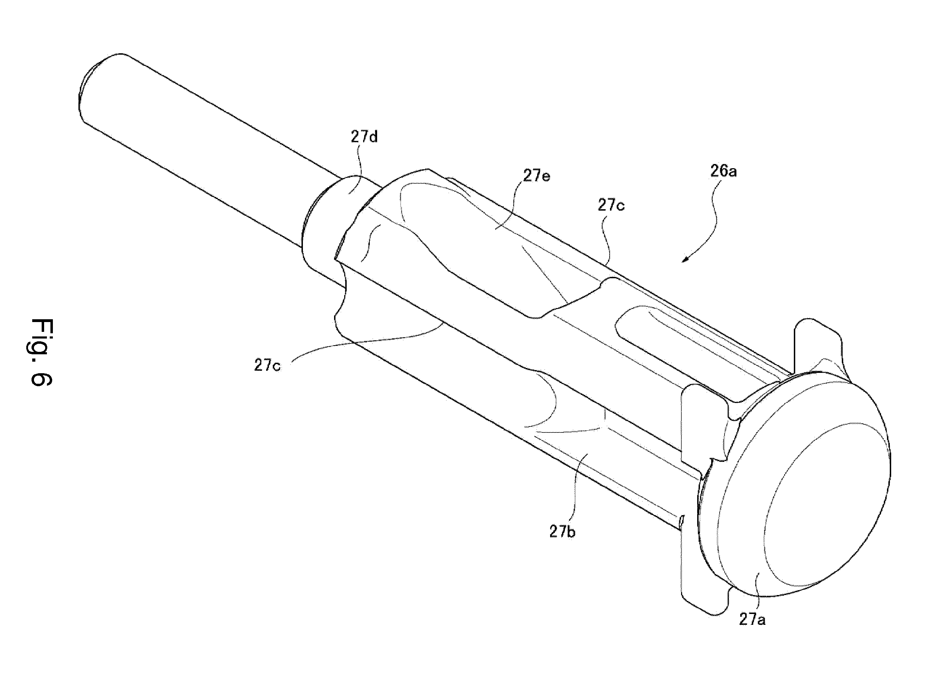

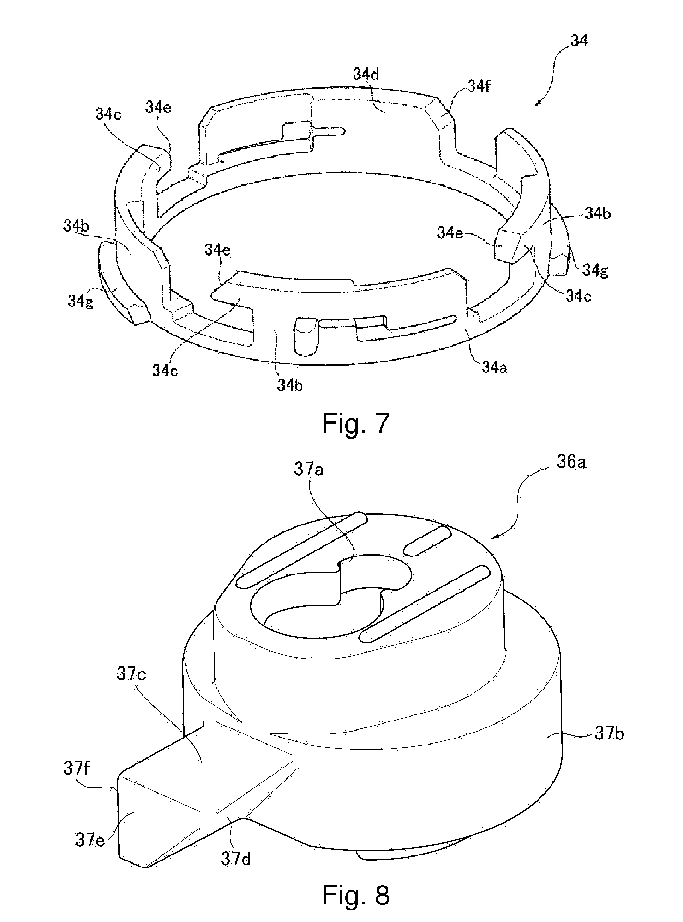

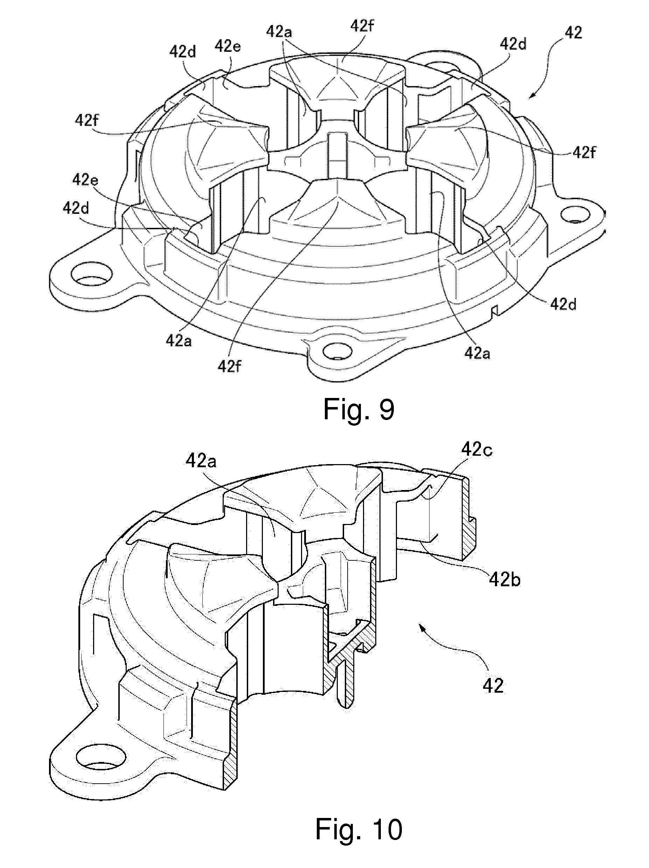

FIG. 5 is a cross-sectional view illustrating water passages switched in the hand shower head. FIG. 6 is a perspective view of a valve element housed in the water passage switching device. FIG. 7 is a perspective view of an annular lock member provided in the water passage switching device. FIG. 8 is a perspective view of a cam-constructing member provided in the water passage switching device. FIG. 9 is a perspective view of an operation portion covering member provided in the water passage switching device, and FIG. 10 is a cross-sectional perspective view of the operation portion covering member.

As illustrated in FIGS. 3 and 4, the water passage switching device 10 comprises a water passage switching device body 24, first, second and third valve elements 26a, 26b and 26c slidably arranged within the water passage switching device body 24, and a valve seat forming member 28 formed with three valve seats which are opened and closed by the valve elements.

The water passage switching device 10 further comprises four cylindrical support members 32, an annular lock member 34 which serves as a rotational lock member, first, second and third cam-constructing members 36a, 36b and 36c, a reset cam-constructing member 38, three operation rods 40a, 40b and 40c, an operation portion covering member 42, a pivoting member 44, and an elastic cover member 46.

As illustrated in FIGS. 3 to 5, the water passage switching device body 24 is an approximately tubular-shaped member which is configured such that the hot and cold water that has passed through the water flow passage forming member 8 is flowed therein. The water passage switching device body 24 includes therein three valve elements: a first valve element 26a, a second valve element 26b and a third valve element 26c arranged parallel to the width direction of the hand shower head 1 in side-by-side relation to each other. Further, these three valve elements are slidably supported in a longitudinal direction of the hand shower head 1, and are movable between a valve-open position and a valve-closed position. When any of the first, second and third valve elements is opened, the hot and cold water that has flowed in from the water flow passage forming member 8 passes through the opened valve seat to be flowed out from the water passage switching device 10.

As illustrated in FIG. 6, the first valve element 26a includes a seating portion 27a, a support frame 27b formed on the back side of the seating portion 27a, sliding protrusions 27c provided on both sides of the support frame 27b, and a spring attachment portion 27d formed on the back side of the support frame 27b.

The seating portion 27a is a disk-shaped portion provided at the distal end of the first valve element 26a. The valve hole provided in the valve seat forming member 28 is closed by the distal end of the seating portion 27a when it is seated on the valve seat forming member 28.

The support frame 27b is a rectangular parallelepiped frame formed on the back side of the seating portion 27a. The seating portion 27a is supported by the support frame 27b so as to be seated on a proper position of the valve seat forming member 28.

The sliding protrusions 27c are elongated protrusions each provided on both sides of the support frame 27b. The sliding protrusions 27c are slid along an elongated guiding portion 24a (FIG. 5) provided within the water passage switching device body 24. This causes the first valve element 26a to be linearly moved within the water passage switching device body 24.

The spring attachment portion 27d is a protrusion having a circular cross-section, formed on the back side of the support frame 27b. By fitting the spring attachment portion 27d inside a coil spring 54 (FIG. 5), the coil spring 54 is attached to the first valve element 26a. The coil spring 54 biases the first valve element 26a toward the valve-closed position.

Further, inside the support frame 27b, there is provided an inclined plane 27e which serves as moving direction conversion means. The inclined plane 27e is an inclined planar portion which is integrally formed inside the support frame 27b. The first valve element 26a is driven to a valve-opening direction by the inclined plane 27e when it is pushed by the distal end of the operation rod 40a, as described below.

The second valve element 26b and the third valve element 26c also have an approximately the same configuration as the first valve element 26a, as illustrated in FIGS. 4 and 5. However, the second and third valve elements are formed in L-shaped as a whole because the seating portion for opening and closing the valve seat and the support frame for supporting the seating portion are configured to be offset from each other. Additionally, in the second and third valve elements, the coil spring 54 is attached to the back side of the seating portion, which biases the second and third valve elements to the valve-closed position, respectively. Further, the support frame of the second valve element 26b and the third valve element 26c is also provided with an inclined plane as with the first valve element 26a. Each of the second and third valve elements is driven to the valve-opening direction by the inclined plane when it is pushed by a respective one of the operation rods 40b and 40c.

As illustrated in FIG. 4, the valve seat forming member 28 is an approximately oval-shaped plate-like member, in which three valve holes 28a, 28b and 28c are formed in line at regular intervals on which the first valve element 26a, the second valve element 26b and the third valve element 26c are seated, respectively.

As illustrated in FIGS. 3 and 4, the cylindrical support members 32 are cylindrically-shaped members which are arranged on the water passage switching device body 24 on the upper side (the side of water spray plate of the hand shower head 1) thereof in FIG. 3. The four cylindrical support members 32 are disposed on the upper circumference of the water passage switching device body 24 at regular intervals. Three coil springs 48a which serve as cam biasing means and a coil spring 48b which serves as resetting cam biasing means are disposed to surround each cylindrical support member 32, respectively. On each coil spring 48a, a first, second and third cam-constructing members 36a, 36b and 36c are disposed to cover each cylindrical support member 32, respectively. Therefore, each cam-constructing member is biased by the coil spring 48a toward an initial position (upper side in FIG. 3) along the cylindrical support member 32. Likewise, on the coil spring 48b, a reset cam-constructing member 38 is disposed to cover the cylindrical support member 32. Therefore, the reset cam-constructing member 38 is biased by the coil spring 48b toward an initial position (upper side in FIG. 3) along the cylindrical support member 32.

As illustrated in FIGS. 4 and 7, the annular lock member 34 is an annular-shaped member, and is disposed to surround the periphery of the four cylindrical support members 32. The annular lock member 34 is disposed in a rotatably movable manner around the cylindrical support members 32 between a locking position and an unlocking position about the central axis of the annular lock member 34. Further, the annular lock member 34 is biased toward the locking position by two torsion springs 50 (FIG. 4) which serve as lock member biasing means. Each torsion spring 50 is fitted in a respective one of shaft portions 24c (FIG. 4) which are formed on the water passage switching device body 24. Each torsion spring 50 has one end in engagement with the annular lock member 34 and the other end in engagement with the operation portion covering member 42 (FIG. 4), thereby to bias the annular lock member 34 to be rotated about its central axis toward the locking position. The two torsion springs 50 are disposed at regular intervals on a periphery centered on the central axis of the annular lock member 34

The annular lock member 34 further includes an annular-shaped annular portion 34a, three stand-out portions 34b extending from the annular portion 34a, engaging pawls 34c each formed on the distal end of the stand-out portions 34b, and a resetting stand-out portion 34d extending from the annular portion 34a.

As illustrated in FIG. 7, the three stand-out portions 34b are protrusions which extend from the annular portion 34a in a direction approximately parallel to the central axis of the annular portion 34a. At each of the distal end of the stand-out portions 34b, an engaging pawl 34c is formed which extends to a circumferential direction of the annular portion 34a. Accordingly, each stand-out portion 34b and engaging pawl 34c constructs an inverted L-shaped engaging portion, respectively. Each stand-out portion 34b is provided on the annular portion 34a at intervals of 90-degree central angle.

Further, on the top surface side (the side opposite to the annular portion 34a) of each engaging pawl 34c, a cam surface 34e is provided which is a slope inclined with respect to the annular portion 34a. The annular lock member 34 is driven from the locking position to the unlocking position against the biasing force of the torsion springs 50 by the cam surfaces 34e which serve as pushed portions when these cam surfaces are pushed from the upper side (the side opposite to the annular portion 34a) by the first, second and third cam-constructing members 36a, 36b and 36c. On the other hand, when the annular lock member 34 is returned to the locking position by the biasing force of the torsion springs 50, any of the cam-constructing members pressed down from the initial position is engaged with the lower side (the side facing to the annular portion 34a) of the engaging pawl 34c and held in the pressed-down position. In this embodiment, a cam surface 34e which serves as a pushed portion is formed on the top surface side of each engaging pawl 34c, so that the pushed portion and the engaging portion are integrally formed.

The resetting stand-out portion 34d is a protrusion which extends from the annular portion 34a in a direction approximately parallel to the central axis of the annular portion 34a. The resetting stand-out portion 34d is formed to have a width wider than the stand-out portion 34b, and is provided with a cam surface 34f which is inclined with respect to the annular portion 34a on a top surface side (the side opposite to the annular portion 34a) thereof. The resetting stand-out portion 34d is provided on the annular portion 34a at intervals of 90-degree central angle with respect to each of the two stand-out portions 34b. Therefore, the three stand-out portions 34b and the resetting stand-out portion 34d are provided at intervals of 90-degree central angle with each other.

The annular lock member 34 is driven from the locking position to the unlocking position against the biasing force of the torsion springs 50 by the cam surface 34f of the resetting stand-out portion 34d when it is pushed from the upper side (the side opposite to the annular portion 34a) by the reset cam-constructing member 38. However, since the resetting stand-out portion 34d is not provided with the engaging pawl 34c, when the pushing force acting on the reset cam-constructing member 38 is removed, the reset cam-constructing member 38 is returned to its initial position without being held.

As illustrated in FIGS. 3, 4 and 8, the first cam-constructing member 36a is a circular cap-like member having an opened lower side (the side facing to the water passage switching device body 24), and is configured to receive the cylindrical support member 32 in the opening (FIG. 3). This causes the first cam-constructing member 36a to be movably supported along the cylindrical support member 32. The first cam-constructing member 36a is formed with a gourd-shaped attaching hole 37a, and the operation rod 40a is attached to the first cam-constructing member 36a by being fitted in the attaching hole 37a (FIG. 3).

In addition, the first cam-constructing member 36a is formed with a flange 37b on the lateral side thereof in a manner to surround the periphery of the first cam-constructing member 36a. The first cam-constructing member 36a is biased upwardly (to the direction opposite to the water passage switching device body 24) by the coil spring 48a when it is engaged with the flange 37b.

Further, the first cam-constructing member 36a has an operation cam 37c provided in one location of the lateral side thereof in a manner to project to the radially outward direction. The lower side surface (the surface facing to the water passage switching device body 24) of the operation cam 37c is obliquely cut out, and is formed with an inclined cam surface 37d. The cam surface 37d is formed to have an angle conforming to the cam surface 34e of the annular lock member 34. When the first cam-constructing member 36a is pressed down from its initial position, the cam surface 37d of the first cam-constructing member 36a and the cam surface 34e of the annular lock member 34 make a sliding movement with each other, causing the annular lock member 34 to be rotated from the locking position toward the unlocking position.

In addition, as illustrated in FIG. 4, the second and third cam-constructing members 36b and 36c are configured in an identical shape to the first cam-constructing member 36a. An operation rod 40b is attached to the second cam-constructing member 36b, while an operation rod 40c is attached to the third cam-constructing member 36c. Further, the second and third cam-constructing members 36b and 36c are also biased upwardly (to the direction opposite to the water passage switching device body 24) by the coil spring 48a, as with the first cam-constructing member 36a. The cam surface provided on each of the second and third cam-constructing members 36b and 36c also makes a sliding movement with the corresponding cam surface 34e of the annular lock member 34, causing the annular lock member 34 to be rotated from the locking position toward the unlocking position.

Further, as illustrated in FIG. 4, the reset cam-constructing member 38 is also configured in an identical shape to the first cam-constructing member 36a. The operation cam provided on the reset cam-constructing member 38 functions as a resetting cam. An operation rod 40d is attached to the reset cam-constructing member 38, which is configured to be shorter than other operation rods. The reset cam-constructing member 38 is also biased upwardly (to the direction opposite to the water passage switching device body 24) by the coil spring 48b, as with the first cam-constructing member 36a. The cam surface provided on the reset cam-constructing member 38 is formed to have an angle conforming to the cam surface 34f provided on the resetting stand-out portion 34d of the annular lock member 34. When the reset cam-constructing member 38 is pressed down from its initial position, the cam surface of the reset cam-constructing member 38 and the cam surface 34f of the resetting stand-out portion 34d make a sliding movement with each other, causing the annular lock member 34 to be rotated from the locking position toward the unlocking position.

Each of the first, second and third cam-constructing members 36a, 36b and 36c, and the reset cam-constructing member 38 is disposed to receive a respective one of the four cylindrical support members 32. Each cylindrical support member 32 is arranged on a circumference which forms a concentric circle with the annular lock member 34. Therefore, the first, second and third cam-constructing members 36a, 36b and 36c, and the reset cam-constructing member 38 are arranged along the circumference of the annular lock member 34.

As illustrated in FIG. 4, the operation rods 40a, 40b and 40c which serve as valve actuating rods are shafts having a circular cross-section formed in an identical shape, the distal end of which is formed as a hemisphere surface. Each of the operation rods 40a, 40b and 40c is attached to a respective one of the first, second and third cam-constructing members 36a, 36b and 36c, and is arranged around a pivot point about which the pivoting member 44 makes a pivoting movement. Each of the operation rods 40a, 40b and 40c has a base end (the side opposite to the water passage switching device body 24) with expanded diameter whose end face is formed in a convex shape which is raised in the middle. The base end of the operation rod 40d attached to the reset cam-constructing member 38 is also formed in the same shape.

As illustrated in FIG. 3, the operation rod 40a attached to the first cam-constructing member 36a is projected to the lower side (in a direction of water passage switching device body 24) through the cylindrical support member 32. The projected operation rod 40a is inserted in the water passage switching device body 24 through the circular hole 24b (FIG. 4) provided in the water passage switching device body 24. The distal end of the inserted operation rod 40a abuts the first valve element 26a. In addition, a doughnut-shaped packing (gasket) 52 is disposed in each circular hole 24b to ensure water-tightness between the operation rod 40a and the water passage switching device body 24.

According to this configuration, when the first cam-constructing member 36a is downwardly (in a direction of water passage switching device body 24) moved along the cylindrical support member 32, the operation rod 40a is also downwardly moved together, causing the distal end of the operation rod 40a to push against the inclined plane 27e of the first valve element 26a. This drives the first valve element 26a to the valve-opening direction.

According to the similar configuration, when the second cam-constructing member 36b is pressed down, the operation rod 40b attached to the second cam-constructing member 36b pushes against the inclined plane provided on the second valve element 26b to drive the second valve element 26b to the valve-opening direction. When the third cam-constructing member 36c is pressed down, the operation rod 40c attached to the third cam-constructing member 36c pushes against the inclined plane provided on the third valve element 26c to drive the third valve element 26c to the valve-opening direction.

A structure of the operation portion covering member 42 will be described below with new reference to FIGS. 9 and 10. As illustrated in FIG. 4, the operation portion covering member 42 is a circular cup-like member having an opened lower side (the side facing to the water passage switching device body 24). The operation portion covering member 42 is attached to the water passage switching device body 24, inside of which the annular lock member 34, the first, second and third cam-constructing members 36a, 36b and 36c, the coil spring 48a, and the torsion springs 50 are housed.

As illustrated in FIG. 9, the operation portion covering member 42 is formed with four openings 42a on the upper end surface (the surface opposite to the water passage switching device body 24) thereof. Each of the upper portions of the first, second and third cam-constructing members 36a, 36b and 36c, and the reset cam-constructing member 38 is projected from the upper end surface of the operation portion covering member 42 through a respective one of the four openings 42a. Each flange 37b of each cam-constructing member and the reset cam-constructing member is engaged with an edge of each opening 42a, thereby to retain each cam-constructing member and the reset cam-constructing member inside the operation portion covering member 42.

The annular lock member 34 is provided with two flanges 34g (FIG. 7) on an outer periphery thereof. On the other hand, as illustrated in FIG. 10, the operation portion covering member 42 is formed with a stepped portion 42b on an inner lower area thereof. The rotational movement of the annular lock member 34 within the operation portion covering member 42 is guided by the stepped portion 42b when each flange 34g is received under the stepped portion 42b. Further, the operation portion covering member 42 has an inner ceiling surface 42c which is formed to make a sliding movement with respect to the stand-out portion 34b of the annular lock member 34 and the upper end surface of the resetting stand-out portion 34d. The rotational movement of the annular lock member 34 is also guided by this ceiling surface 42c. Therefore, the operation portion covering member 42 functions as a rotation guiding member for guiding the rotational movement of the annular lock member 34.

Further, each operation cam 37c of the first, second and third cam-constructing members and the reset cam-constructing member 38 is guided by the operation portion covering member 42 when it is moved between its initial position and pressed-down position in a direction parallel to the central axis of the annular lock member 34. Specifically, the distal end surface 37e (FIG. 8) of each operation cam 37c is slid and guided with respect to each inner wall surface 42d (FIG. 9) of the operation portion covering member 42. The vertical surface 37f on the opposite side of the cam surface 37d of each operation cam 37c is slid and guided with respect to each vertical surface 42e (FIG. 9) which is oriented in a radial direction of the operation portion covering member 42. Therefore, the operation portion covering member 42 functions as a cam guiding member for guiding a movement of each operation cam 37c in a direction parallel to the central axis of the annular lock member 34.

As illustrated in FIG. 4, the pivoting member 44 is an approximately disk-shaped member. The pivoting member 44 is provided, at the center thereof, with a downwardly protruding pivoting protrusion 44a (FIG. 3) whose distal end is formed as a spherical surface. The distal end of the pivoting protrusion 44a is received in a pivot concave portion 43a of a pivot-receiving member 43. The contact point between the distal end of the pivoting protrusion 44a and the pivot concave portion 43a functions as a pivot point which is located on the central axis of the annular lock member 34. The pivot-receiving member 43 is received in a concave portion provided at the center of the upper end surface of the operation portion covering member 42. When the pivoting member 44 is tilted to any direction about the pivot point, the underside surface (the surface facing to the water passage switching device body 24) of the pivoting member 44 pushes the upper end of any of the operation rods 40a, 40b and 40c, causing the cam-constructing member along with the operation rod to be moved to its pressed-down position. When the pivoting member 44 is tilted toward the reset cam-constructing member 38, the pivoting member 44 pushes the reset cam-constructing member 38, causing the reset cam-constructing member 38 to be moved to its pressed-down position.

In this regard, the base end of each operation rod 40a, 40b, 40c and 40d having an expanded diameter is formed as a concave surface, which is an approximately the same shape as a trajectory made by the pivoting member 44 when it is tilted. This configuration makes it possible to reduce the wear caused by a contact as compared to the case of forming the base end as a flat surface. Further, the base end and a surface of the pivoting member 44 contacting with the base end are formed to be coincident with each other and to have a large contact area. Specifically, each operation rod and the pivoting member 44 are configured to make linear contact or surface contact with each other. While the base end of each operation rod 40a, 40b, 40c and 40d has an expanded diameter (the base end is expanded in all directions) in this embodiment, it is also possible to configure each operation rod to have a base end formed in a shape expanded only in radially outward direction of a circle centered on the pivot point. This makes it possible to position the contact point between the base end of each operation rod and the pivoting member 44 in radially outward location, while disposing each operation rod in proximity to the center of the annular lock member 34. This configuration makes it possible to set the tilting angle of the pivoting member 44 needed to move each operation rod to be small.

On the other hand, each of four raised portions 42f is provided between adjacent ones of the four openings 42a on an upper surface of the operation portion covering member 42 (FIG. 9). A ridge line of each of the raised portions 42f is oriented in a radial direction of the operation portion covering member 42, and each raised portion 42f becomes highest at the intermediate position between the adjacent openings 42a. Thus, in the event of tilting movement of the pivoting member 44 in a direction intermediate between the cam-constructing members or in a direction intermediate between the cam-constructing member and the reset cam-constructing member, the pivoting member 44 and the ridge line of the raised portion 42f interfere with each other to prevent the tilting movement in that direction. For this reason, the pivoting member 44 is always tilted in a direction of any of the cam-constructing members or the reset cam-constructing member. Thus, the operation portion covering member 42 functions as a tilting movement restricting member for restricting the tilting movement of the pivoting member 44 in a predetermined four directions.

As illustrated in FIG. 4, the elastic cover member 46 is an approximately circular bowl-shaped elastic member, and is formed with an opening 46a in the center thereof. The push-button 6 is attached to the pivoting member 44 through the opening 46a (FIG. 3). Specifically, the elastic cover member 46 is fixed by being sandwiched between the push-button 6 and the pivoting member 44. In this way, the push-button 6 and the pivoting member 44 are integrated and function as a pivotally movable tilting operation member, where the push-button 6 constitutes an operation portion of the tilting operation member to which an operation force is applied by a user, and the pivoting protrusion of the pivoting member 44 constitutes a tilting shaft of the tilting operation member. The elastic cover member 46 is disposed to cover an upper end portion (a portion opposite to the water passage switching device body 24) of the operation portion covering member 42. The elastic cover member 46 is composed of a flexible elastic body, and thus when a push operation is performed on the push-button 6, it is elastically deformed to allow tilting movement of the push-button 6 and the pivoting member 44 about the pivot point. When the operation force acting on the push-button 6 is removed, the elastic cover member 46 is returned to the original shape due to its elasticity to cause the push-button 6 and the pivoting member 44 to be returned to their untilted position.

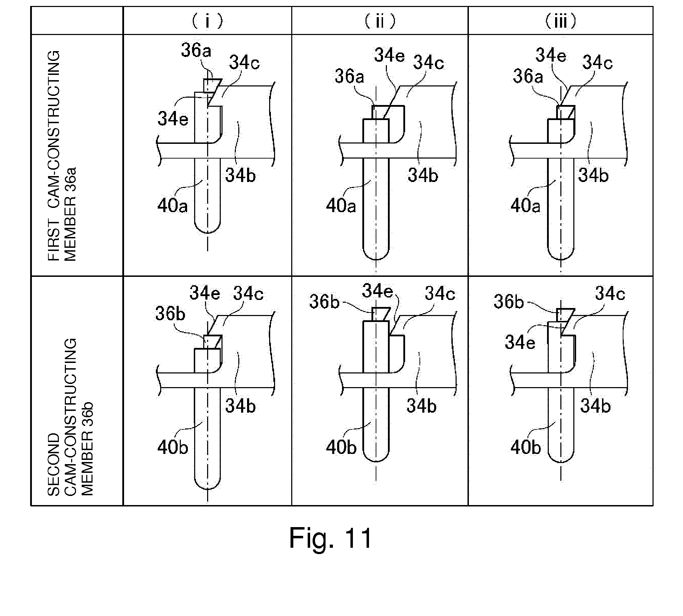

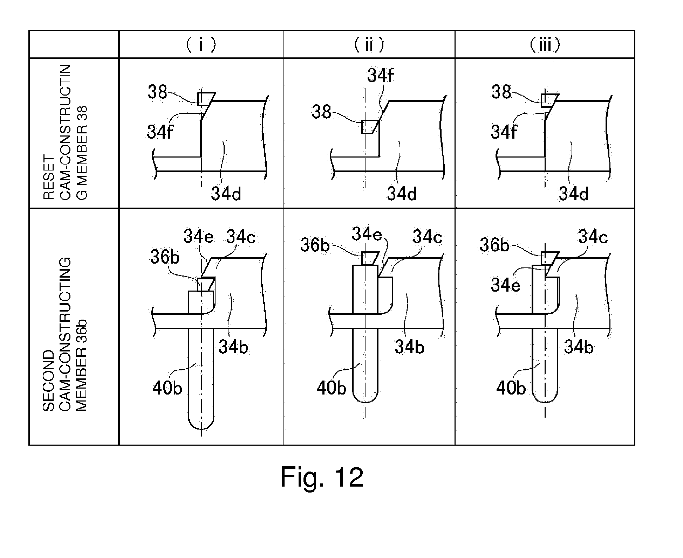

Actions of the hand shower head 1 according to the first embodiment of the present invention will be described below with new reference to FIGS. 11 and 12. FIGS. 11 and 12 are diagrams for explaining actions of the water passage switching device 10 housed in the hand shower head 1.

Firstly, an outline of actions of the hand shower head 1 will be described with reference to FIGS. 1, 2 and 5.
When a user of the hand shower head 1 pushes the push-button 6 to tilt it to the side of the water spray plate 4 (the side where the first cam-constructing member 36a and the operation rod 40a are disposed), the first valve element 26a is caused to be in a valve-open state to initiate water spouting. When the first valve element 26a is caused to be in a valve-open state, the hot and cold water that has flowed from the water flow passage forming member 8 into the water passage switching device 10 flows through the periphery of the first valve element 26a into the valve hole 28a of the valve seat forming member 28 as indicated by arrows in FIGS. 2 and 5 (FIGS. 2 and 5 illustrates the valve-closed state). The hot and cold water that has passed through the valve hole 28a flows into the first water passage 12a of the first water spray chamber forming member 12, and then flows through the through-hole 14b (FIG. 2) of the second water spray chamber forming member 14 which is formed to communicate with the first water passage 12a into a space between the second water spray chamber forming member 14 and the water spray nozzle forming member 18. The hot and cold water that has flowed into this space is spouted from a number of water spray nozzle 18a provided in the water spray nozzle forming member 18.

Then, when the user pushes the push-button 6 to tilt it laterally (to the side where the second cam-constructing member 36b and the operation rod 40b are disposed), the first valve element 26a that has been opened is moved to the valve-closed position whereas the second valve element 26b is moved to the valve-open position. It is noted that the action of the water passage switching device 10 for moving the first valve element 26a to the valve-closed position and moving the second valve element 26b to the valve-open position will be described later. When the second valve element 26b is moved to the valve-open position, the hot and cold water that has flowed into the water passage switching device 10 flows through the periphery of the second valve element 26b into the valve hole 28b of the valve seat forming member 28. The hot and cold water that has passed through the valve hole 28b flows into the second water passage 12b of the first water spray chamber forming member 12. The hot and cold water that has flowed into the second water passage 12b flows through the through-hole 14a (FIG. 2) of the second water spray chamber forming member 14 which is formed to communicate with the second water passage 12b, and is spouted from the spray nozzle hole 20a of the rotary nozzle 20. The rotary nozzle 20 is urged to make a precessional rotary movement by the force of the hot and cold water that has flowed into the second water passage 12b to cause the hot and cold water spouted from the spray nozzle hole 20a to be a spiral gyro-beat spouting.

Further, when the user pushes the push-button 6 to tilt it laterally (to the side where the third cam-constructing member 36c and the operation rod 40c are disposed), the second valve element 26b that has been opened is moved to the valve-closed position whereas the third valve element 26c is moved to the valve-open position. When the third valve element 26c is moved to the valve-open position, the hot and cold water that has flowed into the water passage switching device 10 flows through the periphery of the third valve element 26c into the valve hole 28c of the valve seat forming member 28. The hot and cold water that has passed through the valve hole 28c flows into the third water passage 12c of the first water spray chamber forming member 12. The hot and cold water that has flowed into the third water passage 12c flows out from the through-hole 14c which is formed to communicate with the third water passage 12c. The hot and cold water that has flowed out from the through-hole 14c is spouted in a waterfall-like manner from an arc-shaped water spray nozzle 18b provided opposite the through-hole 14c in the water spray nozzle forming member 18.

Then, when the user pushes the push-button 6 to tilt it to the side opposite to the water spray plate 4 (to the side where the reset cam-constructing member 38 is disposed), the third valve element 26c that has been opened is moved to the valve-closed position and the hand shower head 1 becomes in a water-stopping state.

Actions of the water passage switching device 10 will be described below with reference to FIGS. 11 and 12. FIG. 11 is an explanatory diagram of actions of the water passage switching device 10, illustrating the operation cam of the cam-constructing member, the operation rod attached to the cam-constructing member, and a part of the annular lock member 34, and representing a positional relationship therebetween. The upper stage of FIG. 11 sequentially illustrates a process that the first cam-constructing member 36a is pressed down from the initial position to the pressed-down position and held therein, and the lower stage sequentially illustrates a process that the second cam-constructing member 36b which has been held in the pressed-down position is returned to the initial position simultaneously with the action of the upper stage.

Firstly, in the situation of FIG. 11(i), the first cam-constructing member 36a and the operation rod 40a attached thereto are in the initial position, and the first valve element 26a disposed in association with the operation rod 40a is in the valve-closed position (the position of the first valve element 26a in FIG. 3).
p At the same time, in the situation of FIG. 11(i), the second cam-constructing member 36b and the operation rod 40b attached thereto is in the pressed-down position, and the second valve element 26b disposed in association with the operation rod 40b is in the valve-open position (the position where the operation rod 40b is pressed downward in FIG. 3 and the abutting valve element 26b is moved to the left).

The second cam-constructing member 36b is biased toward the initial position by the coil spring 48a. However, as illustrated in the lower stage of FIG. 11 (i), the second cam-constructing member 36b and the operation rod 40b is held in the pressed-down position against the biasing force of the coil spring 48a because the operation cam of the second cam-constructing member 36b is engaged with the corresponding engaging pawl 34c of the annular lock member 34 which is in the locking position.

Then, when the user operates the push-button 6 to press down the first cam-constructing member 36a, the operation cam 37c of the first cam-constructing member 36a presses the abutting cam surface 34e of the annular lock member 34, as illustrated in FIG. 11(ii). This causes the annular lock member 34 to be rotated in a counterclockwise direction in FIG. 4 (to the right side in FIG. 11) against the biasing force of the torsion springs 50.

When the first cam-constructing member 36a is pressed down to the position as illustrated in the upper stage of FIG. 11(ii), the annular lock member 34 is moved to the unlocking position. Simultaneously, as illustrated in the lower stage of FIG. 11(ii), the engaging pawl 34c that has been engaged with the second cam-constructing member 36b is also moved to the right side in FIG. 11. This causes the engagement between the second cam-constructing member 36b and the engaging pawl 34c to be released, and the second cam-constructing member 36b is returned to the initial position by the biasing force of the coil spring 48a. When the second cam-constructing member 36b and the operation rod 40b are returned to the initial position, the second valve element 26b abutting the operation rod 40b is moved to the valve-closed position by the biasing force of the coil spring 54 that is biasing the second valve element 26b.

Further, as illustrated in the upper stage of FIG. 11(iii), when the first cam-constructing member 36a is pressed down to the position where it is not engaged with the engaging pawl 34c, the annular lock member 34 is rotated in a clockwise direction in FIG. 4 (to the left side in FIG. 11) by the biasing force of the torsion springs 50 and moved to the locking position. When the annular lock member 34 is moved to the locking position, the first cam-constructing member 36a is set in the underside of the engaging pawl 34c to be engaged with the engaging pawl 34c, as illustrated in the upper stage of FIG. 11(iii). This causes the first cam-constructing member 36a to be held in the pressed-down position even after the removal of operation force applied by the user. Further, during the movement of the first cam-constructing member 36a and the operation rod 40a to the pressed-down position, the distal end of the operation rod 40a pushes the inclined plane 27e of the first valve element 26a, and the first valve element 26a is moved to the left side in FIG. 3 against the biasing force of the coil spring 54 attached thereto. When the first cam-constructing member 36a is held in the pressed-down position, the first valve element 26a abutting the operation rod 40a is held in the valve-open position, so that the water-spouting state is maintained.

As described above, in the situation of FIG. 11(i), the second cam-constructing member 36b is held in the pressed-down position and the second valve element 26b is opened, so that the gyro-beat spouting is being performed. In this situation, when the first cam-constructing member 36a is pressed down from the initial position to the pressed-down position, the second cam-constructing member 36b is moved from the pressed-down position to the initial position and the second valve element 26b is closed, as illustrated in FIG. 11(ii). Simultaneously, the first valve element 26a is opened to initiate the spray spouting. Further, as illustrated in FIG. 11(iii), the first cam-constructing member 36a which is pressed down to the pressed-down position is held therein, so that the spouting-state is maintained even after removal of the pushing force.

While the example as shown in FIG. 11 has described the case where the first cam-constructing member 36a is pushed during the gyro-beat spouting is performed, the water passage switching device 10 of this embodiment acts such that when a cam-constructing member for any water spouting is pressed down during the performance of another water spouting, the prior spouting is stopped and the spouting of the pattern corresponding to the pushed cam-constructing member is initiated.

Actions of the water passage switching device 10 when the reset cam-constructing member 38 is pushed will be described below with reference to FIG. 12.
FIG. 12 is an explanatory diagram of actions of the water passage switching device 10, illustrating a positional relationship between the operation cam of the reset cam-constructing member 38, the operation cam of the cam-constructing member, the operation rod attached to the cam-constructing member, and a part of the annular lock member 34. The upper stage of FIG. 12 sequentially illustrates a process that the reset cam-constructing member 38 is pressed down from the initial position to the pressed-down position and again returned to the initial position, and the lower stage sequentially illustrates a process that the second cam-constructing member 36b which has been held in the pressed-down position is returned to the initial position simultaneously with the action of the upper stage.

Firstly, in the situation of FIG. 12(i), the reset cam-constructing member 38 is in the initial position. On the other hand, in the situation of FIG. 12(i), the second cam-constructing member 36b and the operation rod 40b attached thereto are held in the pressed-down position, and the second valve element 26b is in the valve-open position.

Then, when the user operates the push-button 6 to press down the reset cam-constructing member 38, the cam surface 34f of the annular lock member 34 abutting the resetting cam of the reset cam-constructing member 38 is pressed, as illustrated in FIG. 12(ii). This causes the annular lock member 34 to be rotated in a counterclockwise direction in FIG. 4 (to the right side in FIG. 12) against the biasing force of the torsion springs 50.

When the reset cam-constructing member 38 is pressed down to the position as illustrated in the upper stage of FIG. 12(ii), the annular lock member 34 is moved to the unlocking position. Simultaneously, as illustrated in the lower stage of FIG. 12(ii), the engaging pawl 34c that has been engaged with the second cam-constructing member 36b is also moved to the right side in FIG. 12. This causes the engagement between the second cam-constructing member 36b and the engaging pawl 34c to be released, and the second cam-constructing member 36b is returned to the initial position and the second valve element 26b is moved to the valve-closed position.

Further, as illustrated in the upper stage of FIG. 12(ii), since the resetting stand-out portion 34d abutting the reset cam-constructing member 38 is not provided with an engaging pawl, the annular lock member 34 is maintained in the unlocking position even in the situation where the reset cam-constructing member 38 is pressed down to the pressed-down position.

Then, when the operation force applied by the user is removed, the reset cam-constructing member 38 is returned to the initial position by the biasing force of the coil spring 48a as illustrated in the upper stage of FIG. 12(iii).
When the reset cam-constructing member 38 is returned to the initial position, the annular lock member 34 is rotated in a clockwise direction in FIG. 4 (to the left side in FIG. 12) by the biasing force of the torsion springs 50 and moved to the locking position.

As described above, in the situation of FIG. 12(i), the second cam-constructing member 36b is held in the pressed-down position and the second valve element 26b is opened, so that the gyro-beat spouting is being performed. In this situation, when the reset cam-constructing member 38 is pressed down from the initial position to the pressed-down position, the second cam-constructing member 36b is moved from the pressed-down position to the initial position and the second valve element 26b is closed and the hand shower head 1 becomes in a water-stopping state, as illustrated in FIG. 12(ii). Further, as illustrated in FIG. 12, when the operation force applied by the user does not act any more, the reset cam-constructing member 38 is returned to the initial position.

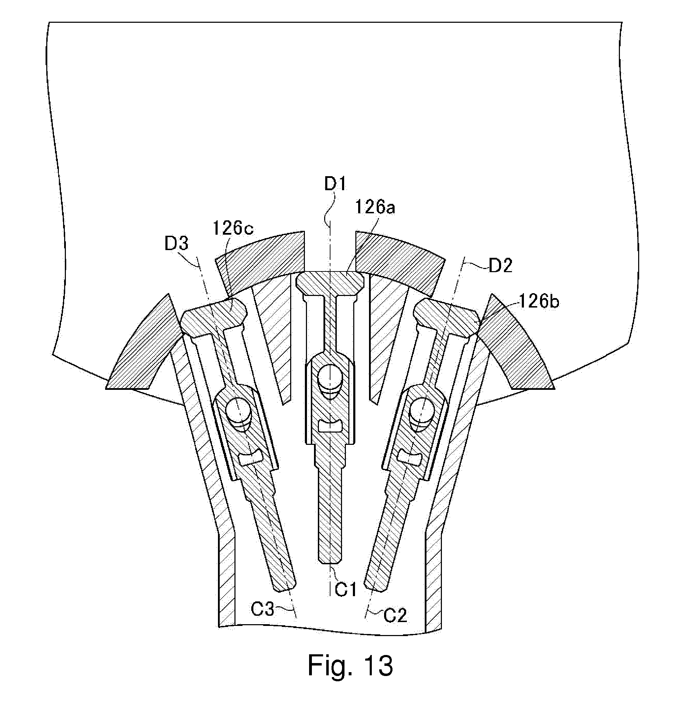

While the example as shown in FIG. 12 has described the case where the reset cam-constructing member 38 is pushed during the gyro-beat spouting is performed, the water passage switching device 10 of this embodiment acts such that when the reset cam-constructing member 38 is pressed down during the performance of any water spouting, the prior spouting is stopped and all the cam-constructing members and the reset cam-constructing member 38 are returned to the initial position.
According to the hand shower head 1 of the embodiment of the present invention, since the water passages can be switched by the plurality of lift valves, water stopping and water spouting can be reliably performed. Since the intervals between the central axes B1, B2, and B3 of the seating portions are formed to be larger than the intervals between the movement axes A1, A2, and A3 (Fig. 5), the seating portions 27a can be increased in size while collectively arranging the support frames 27b for driving the first, second, and third valve elements 26a, 26b, and 26c, and a sufficient spouting water flow rate can be secured.
According to the hand shower head 1 of this embodiment, since the push-button 6 is disposed on the gripper portion 2b of the hand shower head body 2 (Fig. 1), the user can operate the push-button 6 with her/his finger of the hand which is holding the hand shower head 1, and the operability for switching the water spouting modes can be improved. Further, since the seating portions 27a are housed in the water spray portion 2a thicker than the gripper portion 2b, each of the seating portions 27a can be increased in size, and a sufficient spouting water flow rate can be secured.
Furthermore, in the hand shower head 1 of this embodiment, the second valve element 26b and the third valve element 26c at both ends of the three valve elements arranged in a line are bent such that the seating portions of the second and third valve elements come away from the first valve element 26a (Fig. 5). Thus, even if the support frames 27b of the valve elements are arranged in proximity to each other, the large-size seating portions 27a do not interfere with each other. Further, since the second valve element 26b and the third valve element 26c are bent and integrally formed, a force applied on the support frame 27b can be transmitted to the seating portion 27a without loss, and a required driving force of the valve element is not increased.
While preferred embodiment of the present invention has been described above, various modifications can be made to the above described embodiment. In particular, in the embodiment described above, the water passage switching device opens and closes three valve elements. However, the number of valve elements opened and closed by the water passage switching device may be 2 or 4 or more. Further, in the embodiment described above, although the three cam-constructing members and the reset cam-constructing member are configured to be pushed with one pivot member (push-button), operation units such as push-buttons can also be disposed for the cam-constructing members, respectively.
In the embodiment described above, the movement axes A1, A2, and A3 of the first, second, and third valves are arranged in parallel to each other. However, as a modification, the movement axes can also be arranged radially.
In the modification shown in Fig. 13, a first valve element 126a, a second valve element 126b, and a third valve element 126c have the same configurations, respectively, and are linearly formed. Specifically, movement axes C1, C2, and C3 passing through the centers of support frames of the first, second third valve elements coincide with central axes D1, D2, and D3 of the seating portions of the valve elements, respectively. The intervals between the movement axes C1, C2, and C3 are larger on the seating portion side and become smaller toward the side that is distant from the seating portion. In this manner, the movement axes are arranged such that the interval between the movement axes is large on the seating portion and small on the support frame extending from the seating portion, so that the support frames that drive the valve elements can be collectively arranged in proximity to each other while securing a large flow path area.

## Claims

1. A hand shower head capable of switching between a plurality of water spouting modes by switching water passages by a plurality of lift valves, comprising:
a hand shower head body equipped with a gripper portion and a water spray portion thicker than the gripper portion, the gripper portion being gripped by a user;
a seating portion seated on a valve seat of each of the lift valves, and a plurality of valve elements each having a seating portion support portion that extends from the seating portion and supports the seating portion;
a water spouting mode switching member operated by the user to switch the water spouting modes; and
a valve element drive mechanism that causes a force to be applied on the seating portion support portion based on an operation on the water spouting mode switching member to move the seating portion between a valve-open position and a valve-closed position, wherein
the seating portion support portion is moved along a movement axis to move the seating portion between the valve-open position and the valve-closed position, the plurality of valve elements are arranged such that the movement axes of the seating portion support portions are approximately parallel to each other, and an interval between central axes of the seating portions is formed to be larger than an interval between the movement axes.

2. A hand shower head capable of switching between a plurality of water spouting modes by switching water passages by a plurality of lift valves, comprising:
a hand shower head body equipped with a gripper portion and a water spray portion thicker than the gripper portion, the gripper portion being gripped by a user;
a seating portion seated on a valve seat of each of the lift valves, and a plurality of valve elements each having a seating portion support portion that extends from the seating portion and supports the seating portion;
a water spouting mode switching member operated by the user to switch the water spouting modes; and
a valve element drive mechanism that causes a force to be applied on the seating portion support portion based on an operation on the water spouting mode switching member to move the seating portion between a valve-open position and a valve-closed position, wherein
the seating portion support portion is moved along a movement axis to move the seating portion between the valve-open position and the valve-closed position, and the plurality of valve elements are arranged such that an interval between the movement axes of the seating portion support portions is larger on a seating portion side and becomes smaller toward a side that is distant from the seating portion.

3. The hand shower head according to claim 1 or 2, wherein the water spouting mode switching member is disposed in the gripper portion of the hand shower head body, and the seating portions are housed in the water spray portion of the hand shower head body.

4. The hand shower head according to any one of claims 1 to 3, wherein the three valve elements are arranged in a line, and the valve elements arranged at both ends of the three valve elements are formed to be bent such that the seating portions of the valve elements come away from the valve element arranged at the center.
